# EUROPEAN PATENT APPLICATION

(11) **EP 4 711 982 A1**
(43) Date of publication of application: **18.03.2026**
(21) Application number: 25198570.1
(22) Date of filing: 28.08.2025
(51) Int. Cl.: G06N 3/0464, G06N 3/063

(54) **ADAPTIVE ARCHITECTURE FOR NEAR-MEMORY COMPUTING SHARING INACTIVE IN-MEMORY COMPUTING DEVICES**

(30) Priority: 12.09.2024 US 202418883431
(71) Applicant: STMicroelectronics International N.V., 1228 Plan-les-Ouates, Geneva (CH)
(72) Inventor: ROSSI, Michele, 20010 BAREGGIO (IT); CAPPETTA, Carmine, 20146 MILANO (IT); MASSA, Riccardo, 20900 MONZA (IT); BOESCH, Thomas, 6821 ROVIO (CH); DESOLI, Giuseppe, 22042 SAN FERMO DELLA BATTAGLIA (IT)
(74) Representative: Cabinet Beaumont

(57) **Abstract**

A hardware accelerator includes a plurality of functional circuits, a stream switch, one or more data reshape units coupled to the plurality of functional circuits via the stream switch to stream data to and from functional circuits of the plurality of functional circuits, and one or more In-Memory Computing (IMC) clusters coupled to the stream switch. In operation, inactive IMC devices of at least a subset of the one or more IMC clusters are accessible to at least a subset of the one or more data reshape units, via memory interface independent from the stream switch, to serve as at least part of Tightly-Coupled Memory (TCM) dedicated to at least one of the one or more data reshape units.

## Description

### BACKGROUND

### Technical Field

The present disclosure generally relates to hardware architecture for artificial intelligence (AI) workloads acceleration, and in particular, in the context of stream-based hardware accelerators.

### Description of the Related Art

Various computer vision, speech recognition, and signal processing applications may benefit from the use of learning/inference machines, which may quickly perform hundreds, thousands, or even millions of concurrent operations. Learning/inference machines, as discussed in this disclosure, may fall under the technological titles of machine learning, artificial intelligence, neural networks, probabilistic inference engines, accelerators, and the like. Such learning/inference machines may include or otherwise utilize artificial neural networks (ANNs) to, e.g., processes large quantities of data and adaptively "learns" by conflating proximally related features within the data, making broad predictions about the data, and refining the predictions based on reliable conclusions and new conflations. In many cases, a neural network is arranged in a plurality of "layers," and different types of computations are performed at each layer. Hardware accelerators (e.g., neural processing units (NPUs)) are often employed to accelerate the processing of large amounts of data by ANNs.

### BRIEF SUMMARY

Performing inference of a full ANN (e.g., a convolutional neural network (CNN)) on resource-constrained platforms, targeting a throughput which must be compliant with real-time applications, can be a computing-intensive task which is typically dealt with by dedicated hardware accelerators based on highly-parallel architectures. Additionally, the main bottleneck of CNNs is that they require frequent memory accesses, which contribute to most of the power consumption. To avoid excessive data traffic, solutions based on
IMC devices emerged which perform data processing directly inside the memory. However, IMC devices are typically sub-par in terms of performances with respect to standard memories, since they need to accommodate additional circuitry to perform the computation. Hence, there can be a break-even point in cost vs performances such that an architecture using IMC devices can be truly beneficial (e.g., only if using several, large memories). Unfortunately, the geometry of convolutional kernels can change substantially from layer to layer, making it hard to perfectly map the CNN model on available resources in the most efficient way. This means part of the IMC devices could be inactive at run-time, resulting in lower hardware utilization (dark silicon).

In view of the above, in some embodiments of the presently disclosed technology, a hardware accelerator includes a plurality of functional circuits; a stream switch; one or more data reshape units coupled to the plurality of functional circuits via the stream switch to stream data to and from functional circuits of the plurality of functional circuits; and one or more In-Memory Computing (IMC) clusters coupled to the stream switch, wherein in operation, inactive IMC devices of at least a subset of the one or more IMC clusters are accessible to at least a subset of the one or more data reshape units, via memory interface independent from the stream switch, to serve as at least part of Tightly-Coupled Memory (TCM) dedicated to at least one of the one or more data reshape units.

In some embodiments, a system includes a host device and a hardware accelerator. The hardware accelerator includes a plurality of functional circuits; a stream switch; one or more data reshape units coupled to the plurality of functional circuits via the stream switch to stream data to and from functional circuits of the plurality of functional circuits; and one or more In-Memory Computing (IMC) clusters coupled to the stream switch, wherein in operation, inactive IMC devices of at least a subset of the one or more IMC clusters are accessible to at least a subset of the one or more data reshape units, via memory interface independent from the stream switch, to serve as at least part of Tightly-Coupled Memory (TCM) dedicated to at least one of the one or more data reshape units.

In some embodiments, a method includes streaming data between one or more data reshape units of a hardware accelerator and a plurality of functional circuits of the hardware accelerator via a stream switch, wherein one or more In-Memory Computing (IMC) clusters are coupled to the stream switch; and providing at least a subset of the one or more data reshape units with access to inactive IMC devices of at least a subset of the one or more IMC clusters, via memory interface independent from the stream switch, to serve as at least part of Tightly-Coupled Memory (TCM) dedicated to at least one of the one or more data reshape units.

### BRIEF DESCRIPTION OF THE SEVERAL VIEWS OF THE DRAWINGS

One or more embodiments are described hereinafter with reference to the accompanying drawings.
Figure 1 is a functional block diagram of an embodiment of an electronic device or system of the type to which described embodiments may apply.
Figures 2A-2C are block diagrams illustrating the integration of IMC sharing in an example hardware accelerator, in accordance with some embodiments.
Figures 3A and 3B show implementation examples of the presently disclosed technology applicable to different use cases, in accordance with some embodiments.
Figure 4 shows an example implementation of IMC with dedicated configuration register in accordance with some embodiments of the presently disclosed technology.

### DETAILED DESCRIPTION

The following description, along with the accompanying drawings, sets forth certain specific details in order to provide a thorough understanding of various disclosed embodiments. However, one skilled in the relevant art will recognize that the disclosed embodiments may be practiced in various combinations, with or without one or more of these specific details, or with other methods, components, devices, materials, etc. In other instances, well-known structures or components that are associated with the environment of the present disclosure, including but not limited to interfaces, power supplies, physical component layout, convolutional accelerators, Multiply-ACcumulate (MAC) circuitry, control or configuration registers, bus systems, etc., in a programmable hardware accelerator environment, have not been shown or described in order to avoid unnecessarily obscuring descriptions of the embodiments. Additionally, the various embodiments may be methods, systems, devices, computer program products, etc.

Throughout the specification, claims, and drawings, the following terms take the meaning associated herein, unless the context indicates otherwise. The term "herein" refers to the specification, claims, and drawings associated with the current application. The phrases "in one embodiment," "in another embodiment," "in various embodiments," "in some embodiments," "in other embodiments," and other variations thereof refer to one or more features, structures, functions, limitations, or characteristics of the present disclosure, and are not limited to the same or different embodiments unless the context indicates otherwise. As used herein, the term "or" is an inclusive "or" operator, and is equivalent to the phrases "A or B, or both" or "A or B or C, or any combination thereof," and lists with additional elements are similarly treated. The term "based on" is not exclusive and allows for being based on additional features, functions, aspects, or limitations not described, unless the context indicates otherwise. In addition, throughout the specification, the meaning of "a," "an," and "the" include singular and plural references.

Performing inference of a full ANN (e.g., a convolutional neural network (CNN)) on resource-constrained platforms, targeting a throughput which must be compliant with real-time applications, can be a computing-intensive task which is typically dealt with by dedicated hardware accelerators based on highly-parallel architectures. Additionally, the main bottleneck of CNNs is that they require frequent memory accesses, which contribute to most of the power consumption. To avoid excessive data traffic, solutions based on
IMC devices (hereinafter referred to as "IMCs") emerged which perform data processing directly inside the memory. However, IMCs are typically sub-par in terms of performances with respect to standard memories, since they need to accommodate additional circuitry to perform the computation. Hence, there can be a break-even point in cost vs performances such that an architecture using IMCs can be truly beneficial (e.g., only if using several, large memories). Unfortunately, the geometry of convolutional kernels can change substantially from layer to layer, making it hard to perfectly map the CNN model on available resources in the most efficient way. This means part of the IMCs could be inactive at run-time, resulting in lower hardware utilization (dark silicon).

Sharing a memory usually means that bandwidth could be choked by concurrent accesses and that complex hardware is required for bus arbitration and caching (i.e., need to manage if a cache location is dirty or locked). The benefit of a typical TCM is that it is very fast and easy to manage because it is not shared with other units. Such a paradigm is known as Near-Memory Computing (NMC). However, the limit of NMC is that the TCM cannot be used when its coupled unit is inactive.

Embodiments of the presently disclosed technology provide an adaptive architecture to share inactive IMCs with other units of an NPU sub-system which would normally be equipped with TCMs (e.g., to be used as scratch-pad buffer or register file). Dedicated configuration registers can be used to select (e.g., at run-time) the number of devices within a pool of IMCs to be used as TCM by another coupled unit within the NPU. There can be no additional hardware in the coupled unit, as it only needs to obtain or otherwise determine the programmed number IMCs used as TCMs to define the buffer space. A neural network mapping tool or mechanism can then be implemented to guarantee there is no collision or data corruption due to the sharing of IMCs.

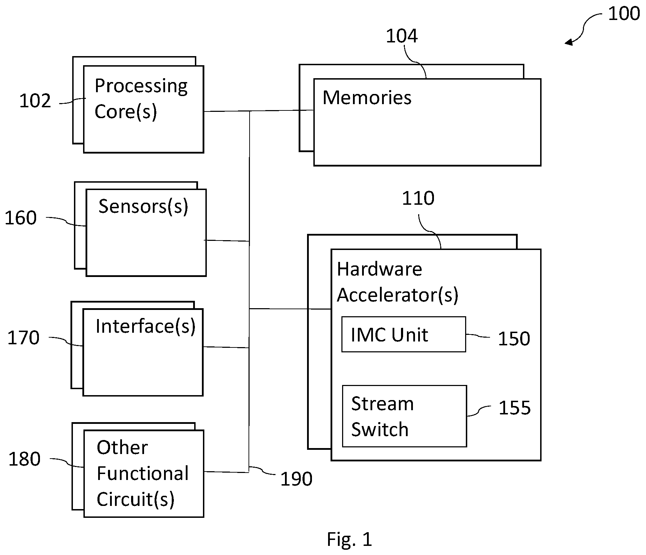

Figure 1 is a functional block diagram of an embodiment of an electronic device or system 100 of the type to which described embodiments may apply. The system 100 comprises one or more processing cores or circuits 102. The processing cores 102 may comprise, for example, one or more processors, a state machine, a microprocessor, a programmable logic circuit, discrete circuitry, logic gates, registers, etc., and various combinations thereof. The processing cores may control overall operation of the system 100, execution of application programs by the system 100 (e.g., programs which classify images using convolutional neural networks (CNNs)), etc.

The system 100 includes one or more memories 104, such as one or more volatile and/or non-volatile memories which may store, for example, all or part of instructions and data related to control of the system 100, applications and operations performed by the system 100, etc. One or more of the memories 104 may include a memory array, which, in operation, may be shared by one or more processes executed by the system 100.

The system 100 can include one or more sensors 160 (*e.g*., image sensors, audio sensors, accelerometers, pressure sensors, temperature sensors, etc.), one or more interfaces 170 (*e.g.,* wireless communication interfaces, wired communication interfaces, etc.), and other circuits 180, which can include antennas, power supplies, one or more built-in self-test (BIST) circuits, etc., and a main bus system 190. The main bus system 190 can include one or more data, address, power and/or control buses coupled to the various components of the system 100.

The system 100 also includes one or more hardware accelerators 110 (e.g., NPUs) which, in operation, accelerate the performance of one or more operations, e.g., associated with implementing a CNN or other ANN. The hardware accelerator 110 as illustrated includes one or more functional circuitry (*e.g.,* convolutional accelerator, pooling layer module, activation unit, direct memory access (DMA) unit, etc.) The hardware accelerator 110 also includes a stream switch 155 or other interconnect and one or more IMC units 150. In some embodiments, an IMC unit includes an IMC cluster of multiple IMC devices, subject to IMC control logic for accessing and operating the IMCs. In some embodiments, the stream switch 155 uses a protocol that is shared between all components or circuitry connected to the stream switch 155.

Embodiments of the presently disclosed technology enable sharing the IMCs with any kind of unit which can employ TCM (hereinafter referred to as "data reshape unit"). The choice of which data reshape unit(s) to couple with IMCs can depend on use case and the type of operation the IMCs can perform. In some embodiments, for neural network applications, efficient performance synergy is achieved when inactive IMCs (e.g., specialized for matrix-vector multiplication (MVM)) are shared with DMAs or similar units (e.g. a light unit dedicated to tensor reshape which can benefit from predetermined access patterns) whose basic functionality is to move data between functional circuits or units of the hardware accelerator 110. The reason is at least partially rooted in the architecture of neural networks: some layers don't require storing data at all (e.g. point-wise convolutions), while others have a high degree of reutilization, so at run-time the amount of IMC memory dedicated to computing and the amount dedicated as TCM can be tunes, updated, or otherwise determined. Coupling IMCs with NMCs introduces an additional degree of freedom for a NPU designer, bringing new opportunities for
hardware-software co-design optimization, improved scalability and the possibility to specialize the hardware for a high- or low-end product.

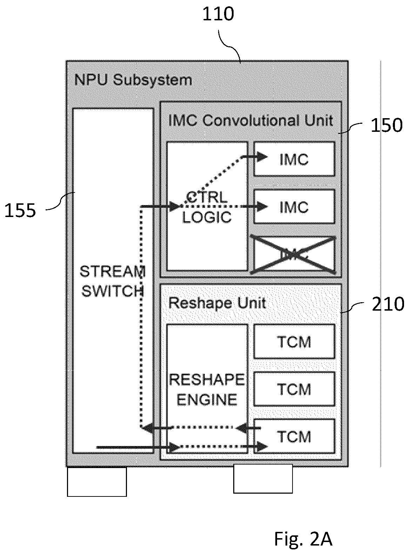

Figures 2A-2C are block diagrams illustrating the integration of IMC sharing in an example hardware accelerator 110. Figure 2A shows an example hardware accelerator 110 (e.g., an NPU subsystem as shown) without or before the integration of IMC sharing. As described above, the hardware accelerator 110 includes one or more functional circuitry 210 (e.g., including a data reshape unit as shown) and one or more IMC units 150 (e.g., including an IMC convolution unit as shown), which are coupled via their connections to the stream switch 155. Here, data is streamed from the stream switch 155 to the reshape unit 210 and stored in one of its TCMs, then reshaped version of the data is streamed to two IMCs of the IMC convolution unit 150 which are working in compute mode. One remaining IMC of the IMC convolution unit 150 is inactive, leading to underutilization of hardware resources.

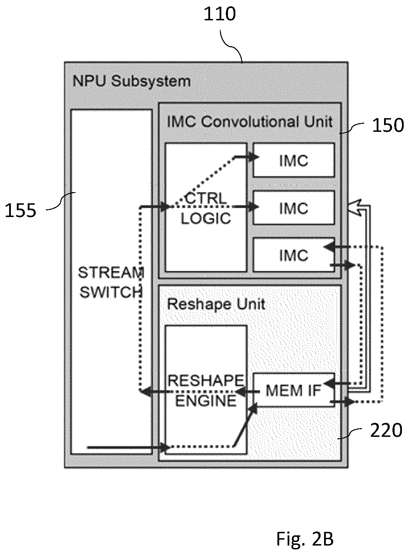

Figure 2B shows the example hardware accelerator 110 with IMC sharing integrated. In comparison with Figure 2A, the data reshape unit 220 is not equipped with any TCM, but it can access the inactive IMC to store input data via a dedicated memory interface. In various embodiments, the dedicated memory interface is independent and separate from the stream switch 155 or main bus system 190; in other words, the dedicated memory interface is dedicated to data communication between the reshape unit 220 and the applicable IMCs of the IMC unit 150. In this way, the presently disclosed technology avoids the cost of additional TCMs and increases hardware utilization.

In some embodiments, a data reshape unit has both dedicated TCMs and access to inactive IMCs. In some embodiments, a data reshape unit has multiple dedicated memory interfaces to gain access to multiple IMC units or clusters. In some embodiments, an IMC unit or cluster can enable access to its IMCs to multiple data reshape units. These choices can be determined at design stage depending on target performances, specifications, constraints, or market segment of the final product.

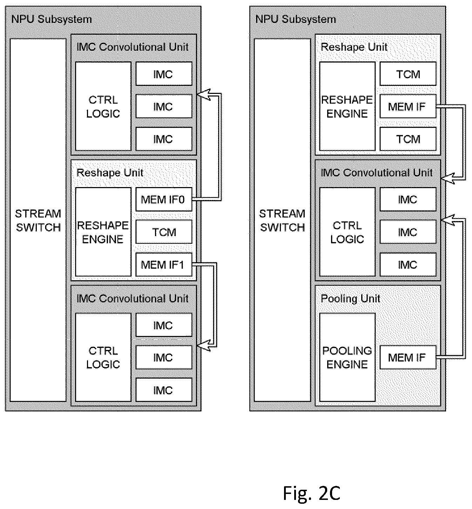

For example, Figure 2C shows two variations of IMC sharing as integrated into the example hardware accelerator. In one sample variation (on the left), the hardware accelerator (e.g., NPU subsystem) includes two or more IMC units or clusters, and a data reshape unit has access to IMCs of each IMC unit via a respective dedicated memory interface while also equipped with at least one dedicated TCM. In another variation (on the right), the hardware accelerator (e.g., NPU subsystem) includes at least two different types or different entities of data reshape units (e.g., one of them being a pooling unit) that all have access to IMCs of the same IMC unit or cluster.

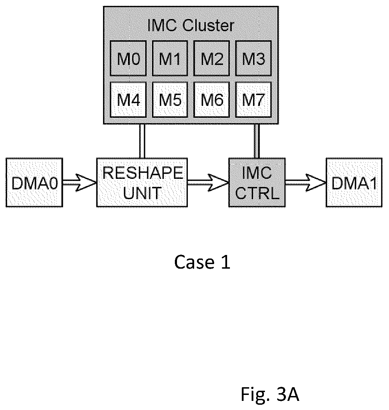

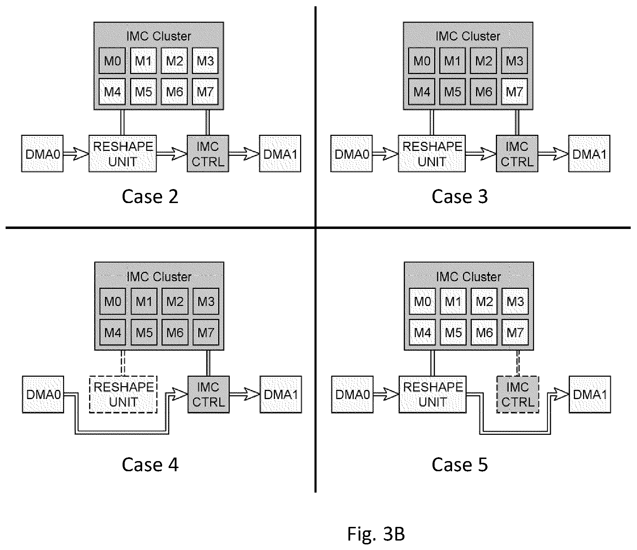

Figures 3A and 3B show various implementation examples of the presently disclosed technology applicable to different use cases. Illustratively, at design time, an NPU subsystem includes at least one IMC cluster of 8 IMC devices, two DMAs with access to external memory, one data reshape unit with access to the IMC cluster and its IMC controller. The IMCs, for example, can perform multiply and accumulate (MAC) operations. The IMC controller can orchestrate the IMC devices to perform the basic convolution operation, which is typically required at the inference stage of a CNN model. At run-time, a neural network mapping tool creates a chain of processing elements to accelerate convolutive layer 0 of a CNN model. Of the two DMAs, DMA0 fetches activation data from the external memory to the data reshape unit, which streams the transposed version of the input tensor to the IMC controller to perform a convolution;
DMA1 stores back into the external memory the resulting output tensor. Here, the kernels of layer 0 is already stored in IMCs.

As shown in Figure 3A, in accordance with use case 1, the kernels of convolutive layer 0 of the CNN model can fit into 4 IMCs. The mapping tool then programs the processing chain to allocate the inactive IMCs (memory mode) as buffer space for the data reshape unit. Even if the total buffer space allocated this way is larger than the minimum required by the data reshape unit to transpose the activation data, the system still benefits from a reduced latency, as DMA0 can pre-fetch new data for the next operation.

As shown in Figure 3B, in accordance with use case 2, the kernels of convolutive layer 1 of the CNN model can fit into 1 IMC - M0, which is programmed to work in compute mode. The remaining 7 inactive IMCs (memory mode) are used as buffer by the data reshape unit.

As shown in Figure 3B, in accordance with use case 3, the kernels of convolutive layer 2 of the CNN model can fit into 7 IMCs - M0 to M6, which are programmed to work in compute mode. The remaining 1 inactive IMC (memory mode) is used as buffer by the data reshape unit.

As shown in Figure 3B, in accordance with use case 4, convolutive layer 3 of the CNN model uses 1x1 kernels, meaning no transposition is required. All IMCs are in compute mode. The mapping tool removes the data reshaping unit from the processing chain and disables it to avoid power losses by switching.

As shown in Figure 3B, in accordance with use case 5, layer 4 of the CNN model is not a convolutive layer. Only a transpose operation is required. The mapping tool programs all IMCs in memory mode for use as buffer by the data reshape unit, removes the IMC controller from the processing chain and disables it to avoid switching losses.

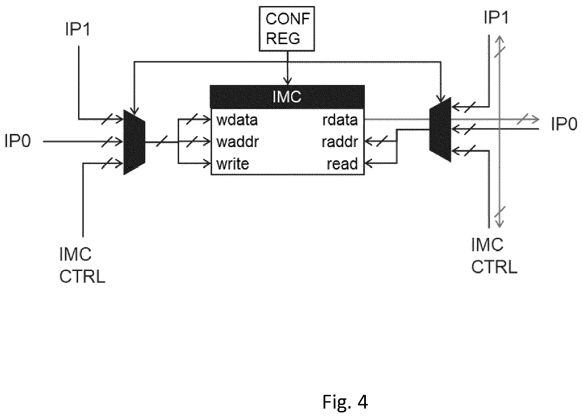

Figure 4 shows an example implementation of IMC with dedicated configuration register in accordance with various embodiments of the presently disclosed technology. As illustrated, the operation mode of an IMC can be changed with a dedicated configuration register. The dedicated configuration register can switch the IMC between memory mode and compute mode. When an IMC is in compute mode, it is used by associated IMC controller to perform some operation, so the multiplexers shown in Figure 4 are programmed by dedicated configuration register(s) to select the IMC controller. When an IMC is in memory mode, it can either be idle or used by other data reshape unit(s) as buffer. Dedicated configuration registers are used to program the multiplexers to select among applicable data reshape units (e.g., IP0, IP1, or the like). A neural network mapping tool can enable idle IMCs in memory mode to be used as TCMs by programming the dedicated configuration registers accordingly.

In some embodiments, IMC devices can be based on SP/DP-RAM technologies and have multiple write/read port (e.g., 1W2R, 2W1R, or the like). Typically, only a fixed set of IMC geometries (Memory Depth by Memory Width) can be used due to technology constraints or impactful area-cost trade-offs. If legacy update is desired, the design can be revamped to modify the TCMs' interfaces whenever there is a geometrical mismatch. To avoid re-designing the existing units or modules and improve both scalability and modularity, an adapter stage can be implemented.

Illustratively, a block (e.g., between dedicated memory interface of a data reshape unit and a corresponding IMC unit to be coupled with) can adapt the memory type mismatch (SPRAM in previous design vs DPRAM IMC) and the memory width mismatch (e.g. 128-bit vs 256-bit). The block adapts the SP signals in input for the writing of the data in the IMC and the DP signals in output for the reading of the data from the IMC. An internal conversion of the data width can also be performed to align to the units needs. Other embodiments can have an arbitrary mix of type or width mismatches (e.g., DP2SP, DP2SP with width mismatch, SP2SP with width mismatch, or the like).

In some embodiments, a hardware accelerator includes a plurality of functional circuits; a stream switch; one or more data reshape units coupled to the plurality of functional circuits via the stream switch to stream data to and from functional circuits of the plurality of functional circuits; and one or more In-Memory Computing (IMC) clusters coupled to the stream switch, wherein in operation, inactive IMC devices of at least a subset of the one or more IMC clusters are accessible to at least a subset of the one or more data reshape units, via memory interface independent from the stream switch, to serve as at least part of Tightly-Coupled Memory (TCM) dedicated to at least one of the one or more data reshape units.

In some embodiments, the memory interface is independent from a system bus to which the hardware accelerator is coupled.

In some embodiments, dedicated configuration registers are used to select, at run-time, a quantity of the inactive IMC devices to serve as at least part of the TCM.

In some embodiments, the one or more data reshape units are configured to move data between the functional circuits. In some embodiments, the one or more data reshape units include a Direct Memory Access (DMA) unit.

In some embodiments, the subset of the one or more data reshape units includes a single data reshape unit having access to inactive IMC devices of more than one IMC clusters that serve as at least part of TCM dedicated to the single data reshape unit.

In some embodiments, the subset of the one or more data reshape units includes more than one data reshape units each having access to inactive IMC devices of a same IMC cluster that serve as at least part of respective TCM dedicated to each of the more than one data reshape units.

In some embodiments, the hardware accelerator is a neural processing unit (NPU).

In some embodiments, inactive IMC devices of the one or more IMC clusters work in memory mode and active IMC devices of the one or more IMC clusters work in compute mode.

In some embodiments, a system includes a host device and a hardware accelerator. The hardware accelerator includes a plurality of functional circuits; a stream switch; one or more data reshape units coupled to the plurality of functional circuits via the stream switch to stream data to and from functional circuits of the plurality of functional circuits; and one or more In-Memory Computing (IMC) clusters coupled to the stream switch, wherein in operation, inactive IMC devices of at least a subset of the one or more IMC clusters are accessible to at least a subset of the one or more data reshape units, via memory interface independent from the stream switch, to serve as at least part of Tightly-Coupled Memory (TCM) dedicated to at least one of the one or more data reshape units.

In some embodiments, the memory interface is independent from a system bus to which the hardware accelerator is coupled.

In some embodiments, dedicated configuration registers are used to select, at run-time, a quantity of the inactive IMC devices to serve as at least part of the TCM.

In some embodiments, the one or more data reshape units are configured to move data between the functional circuits. In some embodiments, the one or more data reshape units include a Direct Memory Access (DMA) unit.

In some embodiments, the subset of the one or more data reshape units includes a single data reshape unit having access to inactive IMC devices of more than one IMC clusters that serve as at least part of TCM dedicated to the single data reshape unit.

In some embodiments, the subset of the one or more data reshape units includes more than one data reshape units each having access to inactive IMC devices of a same IMC cluster that serve as at least part of respective TCM dedicated to each of the more than one data reshape units.

In some embodiments, the hardware accelerator includes a neural processing unit (NPU).

In some embodiments, inactive IMC devices of the one or more IMC clusters work in memory mode and active IMC devices of the one or more IMC clusters work in compute mode.

In some embodiments, a method includes streaming data between one or more data reshape units of a hardware accelerator and a plurality of functional circuits of the hardware accelerator via a stream switch, wherein one or more In-Memory Computing (IMC) clusters are coupled to the stream switch; and providing at least a subset of the one or more data reshape units with access to inactive IMC devices of at least a subset of the one or more IMC clusters, via memory interface independent from the stream switch, to serve as at least part of Tightly-Coupled Memory (TCM) dedicated to at least one of the one or more data reshape units.

In some embodiments, the method includes selecting a quantity of the inactive IMC devices to serve as at least part of the TCM using dedicated configuration registers.

Some embodiments may take the form of or comprise computer program products. For example, according to one embodiment there is provided a computer readable medium comprising a computer program or other computer-executable instructions adapted to perform one or more of the methods or functions described above. The medium may be a physical storage medium, such as for example a Read Only Memory (ROM) chip, or a disk such as a Digital Versatile Disk (DVD-ROM), Compact Disk (CD-ROM), a hard disk, a memory, a network, or a portable media article to be read by an appropriate drive or via an appropriate connection, including as encoded in one or more barcodes or other related codes stored on one or more such computer-readable mediums and being readable by an appropriate reader device.

Furthermore, in some embodiments, some or all of the methods and/or functionality may be implemented or provided in other manners, such as at least partially in firmware and/or hardware, including, but not limited to, one or more application-specific integrated circuits (ASICs), digital signal processors, discrete circuitry, logic gates, standard integrated circuits, controllers (e.g., by executing appropriate instructions, and including microcontrollers and/or embedded controllers), field-programmable gate arrays (FPGAs), complex programmable logic devices (CPLDs), etc., as well as devices that employ RFID technology, and various combinations thereof.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A hardware accelerator, comprising:
a plurality of functional circuits;
a stream switch;
one or more data reshape units coupled to the plurality of functional circuits via the stream switch to stream data to and from functional circuits of the plurality of functional circuits; and
one or more In-Memory Computing (IMC) clusters coupled to the stream switch, wherein in operation, inactive IMC devices of at least a subset of the one or more IMC clusters are accessible to at least a subset of the one or more data reshape units, via memory interface independent from the stream switch, to serve as at least part of Tightly-Coupled Memory (TCM) dedicated to at least one of the one or more data reshape units.

2. A system, comprising:
a host device; and
a hardware accelerator according to claim 1.

3. A method, comprising:
streaming data between one or more data reshape units of a hardware accelerator and a plurality of functional circuits of the hardware accelerator via a stream switch, wherein one or more In-Memory Computing (IMC) clusters are coupled to the stream switch; and providing at least a subset of the one or more data reshape units with access to inactive IMC devices of at least a subset of the one or more IMC clusters, via memory interface independent from the stream switch, to serve as at least part of Tightly-Coupled Memory (TCM) dedicated to at least one of the one or more data reshape units.

4. The hardware accelerator of claim 1, or the system of claim 2, or the method of claim 3, wherein the memory interface is independent from a system bus to which the hardware accelerator is coupled.

5. The hardware accelerator of claim 1 or 4, or the system of claim 2 or 4, or the method of claim 3 or 4, wherein dedicated configuration registers are used to select, at run-time, a quantity of the inactive IMC devices to serve as at least part of the TCM.

6. The hardware accelerator of claim 1, 4, 5, or the system of any of claims 2, 4, 5, or the method of any of claims 3 to 5, wherein the one or more data reshape units are configured to move data between the functional circuits.

7. The hardware accelerator, or system, or method, of claim 6, wherein the one or more data reshape units include a Direct Memory Access (DMA) unit.

8. The hardware accelerator of any of claims 1, 4 to7, or the system of any of claims 2, 4 to 7, or the method of any of claims 3 to 7, wherein the subset of the one or more data reshape units includes a single data reshape unit having access to inactive IMC devices of more than one IMC clusters that serve as at least part of TCM dedicated to the single data reshape unit.

9. The hardware accelerator of any of claims 1, 4 to 8, or the system of any of claims 2, 4 to 8, or the method of any of claims 3 to 8, wherein the subset of the one or more data reshape units includes more than one data reshape units each having access to inactive IMC devices of a same IMC cluster that serve as at least part of respective TCM dedicated to each of the more than one data reshape units.

10. The hardware accelerator of any of claims 1, 4 to 9, or the system of any of claims 2, 4 to 9, or the method of any of claims 3 to 9, wherein the hardware accelerator is a neural processing unit (NPU).

11. The hardware accelerator of any of claims 1, 4 to 10, or the system of any of claims 2, 4 to 10, or the method of any of claims 3 to 10, wherein inactive IMC devices of the one or more IMC clusters work in memory mode and active IMC devices of the one or more IMC clusters work in compute mode.

12. The hardware accelerator of any of claims 1, 4 to 11, or the system of any of claims 2, 4 to 11, or the method of any of claims 3 to 11, comprising selecting a quantity of the inactive IMC devices to serve as at least part of the TCM using dedicated configuration registers.
